# EUROPEAN PATENT SPECIFICATION

(11) **EP 2 802 027 B1**
(45) Date of publication and mention of the grant of the patent: **30.05.2018**
(21) Application number: 13777711.6
(22) Date of filing: 16.04.2013
(51) Int. Cl.: H01M 2/26, H01M 2/30, H01M 10/6553, H01M 2/16, H01M 4/485, H01M 4/505, H01M 4/525, H01M 10/0525

(54) **ELECTRODE ASSEMBLY INCLUDING DIFFERENTLY SHAPED POSITIVE ELECTRODE AND NEGATIVE ELECTRODE, AND SECONDARY BATTERY**
ELEKTRODENANORDNUNG MIT UNTERSCHIEDLICH GEFORMTEN POSITIVELEKTRODEN UND NEGATIVELEKTRODEN SOWIE SEKUNDÄRBATTERIE
ENSEMBLE D'ÉLECTRODES COMPRENANT UNE ÉLECTRODE POSITIVE ET UNE ÉLECTRODE NÉGATIVE DE FORMES DIFFÉRENTES, ET BATTERIE RECHARGEABLE

(30) Priority: 16.04.2012 KR 20120039351; 16.04.2012 KR 20120039246
(43) Date of publication of application: 12.11.2014
(73) Proprietor: LG CHEM, LTD., Seoul 150-721 (KR)
(72) Inventor: LIM, Soo Hyun, Daejeon 305-301 (KR); LEE, Min Hee, Suwon-si Gyeonggi-do 442-827 (KR); LEE, Jae Hyun, Daejeon 305-749 (KR); LEE, Seong Min, Seoul 121-856 (KR); KIM, Jihyun, Daejeon 305-741 (KR); PARK, Tae Jin, Daejeon 305-340 (KR)
(74) Representative: Goddar, Heinz J.
(86) International application number: PCT/KR2013/003205
(87) International publication number: WO 2013/157827

(56) References cited:
- EP-A1- 1 770 801
- WO-A1-2011/111556
- JP-A- 2005 149 882
- JP-A- 2011 108 534
- JP-A- 2012 038 495
- KR-A- 20040 110 921
- KR-A- 20080 102 606
- KR-A- 20080 109 948
- KR-A- 20080 109 948
- KR-A- 20100 081 508
- KR-A- 20100 135 382
- KR-A- 20110 066 632
- US-A1- 2010 323 235
- US-B1- 6 348 283

## Description

### [TECHNICAL FIELD]

The present invention relates to an electrode assembly and secondary battery comprising: a plurality of alternately arranged cathode and anode plates; a separator disposed between the cathode plate and the anode plate; a plurality of cathode tabs respectively formed on the cathode plates in a structure in which the tabs protrude from the electrode surfaces; a plurality of anode tabs respectively formed on the anode plate in a structure in which the tabs protrude from the electrode surfaces; a cathode lead coupled to the cathode tabs; and an anode lead coupled to the anode tabs, wherein the cathode tabs and the anode tabs have different shapes and wherein widths of the cathode tabs and the anode tabs are equal to 2 to 100% a length of electrode surfaces with the tabs formed thereon, wherein the widths are a size in a direction perpendicular to a direction in which tabs protrude from electrode surfaces, wherein the cathode lead and the anode lead are respectively welded to the cathode tabs and the anode tabs, and wherein heights of welding portions where the cathode tabs and the anode tabs are respectively coupled to the cathode lead and the anode lead are equal to 3 to 30%, preferably 3 to 20%, a height of the cathode and anode leads, wherein at least one of the cathode and anode tabs has a tapered shape selected from a trapezoidal shape, an upwardly-tapered funnel shape, a sector shape or a mushroom shape, that a welding portion of which has the wider width.

### [BACKGROUND ART]

As mobile device technology continues to develop and demand therefor continues to increase, demand for secondary batteries as energy sources is rapidly increasing. Among these secondary batteries, lithium secondary batteries, which have high energy density and operating voltage, long cycle lifespan, and low self-discharge rate, are commercially available and widely used.

In addition, as interest in environmental problems is recently increasing, research into electric vehicles (EVs), hybrid EVs (HEVs), and the like that can replace vehicles using fossil fuels, such as gasoline vehicles, diesel vehicles, and the like, which are one of the main causes of air pollution, is actively underway. As a power source of EVs, HEVs, and the like, a nickel metal-hydride secondary battery is mainly used. However, research into lithium secondary batteries having high energy density, high discharge voltage and output stability is actively underway and some lithium secondary batteries are commercially available.

A lithium secondary battery has a structure in which an electrode assembly, in which a porous separator is interposed between a cathode and an anode, each of which includes an active material coated on an electrode current collector, is impregnated with a lithium salt-containing non-aqueous electrolyte. As cathode active materials, lithium cobalt-based oxides, lithium manganese-based oxides, lithium nickel-based oxides, lithium composite oxides, and the like are mainly used. As anode active materials, carbon-based materials are mainly used.

However, in lithium secondary batteries using carbon-based materials as an anode active material, irreversible capacity occurs in some lithium ions intercalated into a layered structure of a carbon-based material during a 1^{st} charging and discharging cycle and thus discharge capacity is reduced. In addition, carbon materials have a low oxidation/reduction potential of about 0.1 V with respect to potential of Li/Li⁺ and thus a non-aqueous electrolyte decomposes at an anode surface and such carbon materials react with lithium to form a layer coated on a surface of a carbon material (a passivating layer or a solid electrolyte interface (SEI) film). The thickness and boundary states of such an SEI film vary according to an electrolyte system used and thus affect charge and discharge characteristics. In addition, in secondary batteries used in fields that require high output characteristics, such as power tools and the like, resistance increases due to such an SEI film having a small thickness and thus a rate determining step (RDS) may occur. In addition, a lithium compound is produced at an anode surface and thus, as charging and discharging are repeated, reversible capacity of lithium gradually decreases and, accordingly, discharge capacity is reduced and cycle deterioration occurs.

Meanwhile, as an anode material having structural stability and good cycle characteristics, use of lithium titanium oxides (LTOs) is under consideration. In lithium secondary batteries including such LTOs as an anode active material, an anode has a relatively high oxidation/reduction potential of about 1.5 V with respect to potential of Li/Li⁺ and thus decomposition of an electrolyte hardly occurs and excellent cycle characteristics are obtained due to stability of a crystal structure thereof.

In addition, existing anode active materials are used by coating onto Cu foil, while an LTO may be used as an anode active material by coating onto A1 foil.

However, it is difficult to distinguish a cathode including a cathode active material coated on Al foil from an LTO anode with the naked eye and thus there is a possibility of cross-welding when lead welding is performed. In addition, Al lead can also be used and, accordingly, the LTO anode is mistaken for a cathode and thus positions of a cathode and an anode may be confused during module assembly or wiring for electrical connection.

Therefore, there is an urgent need to develop technology for fundamentally meeting such requirements.

US 6,348,283 B1 discloses a storage cell in which an electrode has an edge reinforced by a metal strip.

JP 2011-108534 A discloses a laminated secondary battery.

JP 2005-149882 A discloses an electrochemical cell and its manufacturing method.

EP 1 770 801 A1 discloses an assembled battery and a manufacturing method thereof.

KR 2010-0135382 A discloses a lithium secondary battery having multidirectional lead-tap structure.

WO 2011/111556 A1 discloses a lithium-ion secondary battery.

US 2010/323235 A1 discloses a non-aqueous electrolyte secondary battery and combined battery.

### [DISCLOSURE]

### [TECHNICAL PROBLEM]

The present invention aims to address the aforementioned problems of the related art and to achieve technical goals that have long been sought.

As a result of a variety of extensive and intensive studies and experiments, the inventors of the present invention confirmed that, as described below, when cathode and anode tabs are made into different shapes, or when cathode and anode tabs are asymmetrically positioned with respect to electrode surfaces and cathode and anode leads are made into different shapes or asymmetrically positioned with respect to electrode surfaces, and when widths of the cathode and anode tabs are formed to predetermined sizes with respect to the length of the electrode surfaces with the cathode and anode tabs formed thereon, desired effects may be achieved, thus completing the present invention.

### [TECHNICAL SOLUTION]

The above problems are solved in accordance with the subject-matter of the independent claims.

### Preferred embodiments result from the sub-claims

In accordance with one aspect of the present invention, provided isa plurality of alternately arranged cathode and anode plates; a separator disposed between the cathode plate and the anode plate; a plurality of cathode tabs respectively formed on the cathode plates in a structure in which the tabs protrude from the electrode surfaces;
a plurality of anode tabs respectively formed on the anode plate in a structure in which the tabs protrude from the electrode surfaces; a cathode lead coupled to the cathode tabs; and an anode lead coupled to the anode tabs, wherein the cathode tabs and the anode tabs have different shapes and wherein widths of the cathode tabs and the anode tabs are equal to 2 to 100% a length of electrode surfaces with the tabs formed thereon, wherein the widths are a size in a direction perpendicular to a direction in which tabs protrude from electrode surfaces, wherein the cathode lead and the anode lead are respectively welded to the cathode tabs and the anode tabs, and wherein heights of welding portions where the cathode tabs and the anode tabs are respectively coupled to the cathode lead and the anode lead are equal to 3 to 30%, preferably 3 to 20%, a height of the cathode and anode leads, wherein at least one of the cathode and anode tabs has a tapered shape selected from a trapezoidal shape, an upwardly-tapered funnel shape, a sector shape or a mushroom shape, that a welding portion of which has the wider width.

In this regard, the widths mean a size in a direction perpendicular to a direction in which tabs protrude from electrode surfaces and, in particular, the widths of the cathode tabs and the anode tabs may be equal to 2 to 80% the length of the electrode surfaces with the tabs formed thereon.

As the widths of the electrode tabs increase, resistance decreases and heat generation is reduced. When the widths of the electrode tabs are outside the above-described ranges and exceed the above values, manufacturing costs are very high and manufacturing processes for electrical connection between a cathode and an anode become complicated.

In addition, when the widths of the electrode tabs are within the above-described ranges, the widths thereof need not be the same. That is, the widths of the electrode tabs may be identical or different.

The positions of the cathode tabs and the anode tabs are not limited. For example, when manufacturing an electrode assembly, the cathode tabs and the anode tabs may be disposed on an end portion in a lateral direction of the electrode assembly, may be respectively disposed on opposite end portions of the electrode assembly facing each other, or may be respectively disposed on end portions of the electrode assembly perpendicular to each other.

In an embodiment, when manufacturing an electrode assembly, in a case in which both the cathode tabs and the anode tabs are disposed on an end portion in a lateral direction of the electrode assembly when viewed in plan view, the width of each of the cathode and anode tabs may be equal to 5% to 45%, in particular 10% to 40%, the length of the electrode surface so that the cathode tabs and the anode tabs do not overlap each other.

In another embodiment, when manufacturing an electrode assembly, in a case in which the cathode tabs and the anode tabs are respectively disposed on opposite end portions of the electrode assembly facing each other or on end portions thereof perpendicular to each other when viewed in plan view, the cathode tabs and the anode tabs do not overlap each other and thus the width of each of the cathode and anode tabs may be in a wider range than what has been described above, in particular 10% to 80%, more particularly 15% to 70%, the length of the electrode surfaces with the tabs formed thereon.

Meanwhile, the shapes of the cathode tabs and the anode tabs are not particularly limited so long as the cathode tabs are distinguished from the anode tabs. For example, the cathode and anode tabs may have different polygonal shapes or any one kind of the cathode and anode tabs may have a shape with an arc end portion. Moreover, to facilitate welding, the cathode and anode tabs may have a trapezoidal shape, an upwardly-tapered funnel shape, a sector shape, a mushroom shape, or the like that, a welding portion of which has a wide width.

The cathode and anode tabs having different shapes as described above are effective in preventing cross wielding.

However, when the cathode tabs and the anode tabs are symmetrically arranged, electrode leads are respectively coupled to the cathode and anode tabs and thus, during module assembly or wiring for electrical connection, problems such as confusion of the positions of cathode and anode leads have yet to be addressed.

Thus, to address the problems described above, in a specific embodiment, the cathode and anode leads may have different shapes. In this regard, the shapes of the cathode and anode leads are not particularly limited. For example, the cathode and anode leads may have different polygonal shapes, or any one thereof may have a shape with an arc end portion. In another embodiment, one of the cathode and anode leads may have a bent shape so that the cathode and anode leads are asymmetrically positioned with respect to the electrode surfaces, as described above.

Further described herein is an electrode assembly including: a plurality of alternately arranged cathode and anode plates; a separator disposed between the cathode plate and the anode plate; a plurality of cathode tabs respectively formed on the cathode plates; a plurality of anode tabs respectively formed on the anode plates; a cathode lead coupled to the cathode tabs; and an anode lead coupled to the anode tabs, wherein the cathode tabs and the anode tabs are asymmetrically positioned with respect to electrode surfaces with the tabs formed thereon and widths of the cathode tabs and the anode tabs are equal to 5% to 45% the length of the electrode surfaces.

The expression "the cathode tabs and the anode tabs are asymmetrically positioned with respect to electrode surfaces" as used herein means that the cathode tabs and the anode tabs are asymmetrically biased with respect to an axis passing through a center of the electrode assembly, i.e., central points of the electrode surfaces, in the up and down direction.

Due to this configuration, for example, assuming that the electrode assembly is bent in half, the cathode tabs and the anode tabs do not overlap each other.

As described above, a precondition of the configuration in which electrode tabs are asymmetrically positioned is that, when manufacturing the electrode assembly, both the cathode tabs and the anode tabs are positioned on an end portion in a lateral direction of the electrode assembly when viewed in plan view. Thus, the widths of the cathode tabs and the anode tabs may be within the above-described ranges, more particularly 10% to 40% the length of the electrode surfaces.

In this case, when the widths of the cathode tabs and the anode tabs are within the ranges described above, the widths of the cathode tabs and the anode tabs need not be the same, i.e., may be identical or different.

Meanwhile, the cathode tabs and the anode tabs may be formed such that, when manufacturing the electrode assembly, the cathode tabs are positioned on longer electrode surfaces than electrode surfaces on which the anode tabs are formed, or the anode tabs are positioned on longer electrode surfaces than electrode surfaces on which the cathode tabs are formed.

As described above, in a case in which the cathode and anode tabs are asymmetrically positioned, it is easy to distinguish the cathode tabs from the anode tabs and thus cross-welding may be prevented. In addition, since the cathode lead and the anode lead are respectively welded to the cathode tabs and the anode tabs, the cathode and anode leads are also asymmetrically positioned and thus confusion of the positions of the cathode and anode leads during module assembly or wiring for electrical connection may also be prevented.

In this case, the cathode and anode leads may also have different shapes. In this regard, the shapes of the cathode and anode leads are not particularly limited and, for example, may have different polygonal shapes, a shape with an arc end portion, or a bent shape.

Meanwhile, as described above, as a method of enhancing weldability of the electrode lead to the electrode tabs, the welding portion of each of the cathode and anode tabs may have a shape with a large width. In a specific embodiment, however, a height of the welding portion thereof may be equal to 3% to 30%, more particularly 3% to 20%, the height of the electrode lead.

In this regard, the height means a direction in which the tabs protrude from the electrode surfaces.

When considering only weldability, the wider and bigger the welding portion, the better the weldability. However, when the height of the welding portion exceeds 30%, resistance due to welding largely increases. On the other hand, when the height of the welding portion is less than 3%, desired weldability enhancement effects may not be obtained.

Materials of the cathode and anode tabs and the cathode and anode leads may be different. In particular, the materials thereof may be identical, for example, Al.

Hereinafter, other components of the electrode assembly will be described.

The cathode plate is manufactured by coating a mixture of a cathode active material, a conductive material, and a binder on a cathode current collector and drying and pressing the coated cathode current collector. As desired, the mixture may further include a filler.

The cathode current collector is generally fabricated to a thickness of 3 to 500 µm. The cathode current collector is not particularly limited so long as it does not cause chemical changes in the fabricated battery and has high conductivity. For example, the cathode current collector may be made of stainless steel, aluminum, nickel, titanium, sintered carbon, or aluminum or stainless steel surface-treated with carbon, nickel, titanium, silver, or the like. The cathode current collector may have fine irregularities at a surface thereof to increase adhesion between the cathode active material and the cathode current collector. In addition, the cathode current collector may be used in any of various forms including films, sheets, foils, nets, porous structures, foams, and non-woven fabrics.

Examples of the cathode active material may include, but are not limited to, layered compounds such as lithium cobalt oxide (LiCoO₂) and lithium nickel oxide (LiNiO₂), or compounds substituted with one or more transition metals; lithium manganese oxides such as compounds of Formula Li₁₊ₓMn₂₋ₓO₄ where 0≤x≤0.33, LiMnO₃, LiMn₂O₃, and LiMnO₂; lithium copper oxide (Li₂CuO₂); vanadium oxides such as LiV₃O₈, LiV₃O₄, V₂O₅, and Cu₂V₂O₇; Ni-site type lithium nickel oxides having the formula LiNi₁₋ₓMₓO₂ where M=Co, Mn, Al, Cu, Fe, Mg, B, or Ga, and 0.01≤x≤0.3; lithium manganese composite oxides having the formula LiMn₂₋ₓMₓO₂ where M=Co, Ni, Fe, Cr, Zn, or Ta, and 0.01≤x≤0.1 or the formula Li₂Mn₃MO₈ where M=Fe, Co, Ni, Cu, or Zn; spinel-structure lithium manganese composite oxides having the formula LiNiₓMn₂₋ₓO₄ where 0.01≤x≤0.6; LiMn₂O₄ where some of the Li atoms are substituted with alkaline earth metal ions; disulfide compounds; and Fe₂(MoO₄)₃.

In a specific embodiment, the cathode active material may be a spinel-structure lithium manganese composite oxide, which is a high-potential oxide, represented by Formula 1 below:

LiₓM_{y}Mn_{2-y}O_{4-z}A_{z} (1)

wherein 0.9≤x≤1.2, 0<y<2, and 0≤z<0.2;
M is at least one element selected from the group consisting of Al, Mg, Ni, Co, Fe, Cr, V, Ti, Cu, B, Ca, Zn, Zr, Nb, Mo, Sr, Sb, W, Ti, and Bi; and
A is at least one monovalent or divalent anion.

In particular, the lithium manganese composite oxide may be a lithium nickel manganese composite oxide represented by Formula 2 below, more particularly LiNi_{0.5}Mn_{1.5}O₄ or LiNi_{0.4}Mn_{1.6}O₄.

LiₓNi_{y}Mn_{2-y}O₄ (2)

In Formula 2 above, 0.9≤x≤1.2 and 0.4≤y≤0.5.

In another embodiment, the cathode active material may be at least one of oxides represented by Formulas 3 and 4, in particular at least one oxide selected from the group consisting of LiNi_{1/3}Mn_{1/3}Co_{1/3}O₂, LiNi_{0.6}Co_{0.2}Mn_{0.2}O₂, LiNi_{0.8}Co_{0.1}Mn_{0.1}O₂, and LiMn₂O₄.

Li₁₊ₓ,Ni_{1-y'-z'-t}Mn_{y'}Co_{z'}M'ₜO_{2-w}A'_{w} (3)

wherein -0.2<x'<0.2, 0≤y'≤0.4, 0≤z'≤0.4, 0≤t≤0.2, and 0≤w≤0.05; M'= a first row transition metal such as Fe, Cr, Ti, Zn, V, or the like, Al, Mg, or the like; A'= Groups 6A and 7A elements such as S, Se, F, Cl, I, and the like, and

Li_{1+x"}Mn_{2-y"}M"_{y"}O_{4-w'}A"_{w'} (4)

wherein -0.2<x"<0.2, 0≤y"<0.4, and 0≤w'≤0.05; M"=a first row transition metal such as Ni, Mn, Fe, Cr, Ti, Zn, V, or the like; and A"= Groups 6A and 7A elements such as S, Se, F, Cl, I, and the like.

The conductive material is typically added in an amount of 1 to 50 wt% based on the total weight of a mixture including a cathode active material. There is no particular limit as to the conductive material, so long as it does not cause chemical changes in the fabricated battery and has conductivity. Examples of conductive materials include, but are not limited to, graphite such as natural or artificial graphite; carbon black such as carbon black, acetylene black, Ketjen black, channel black, furnace black, lamp black, and thermal black; conductive fibers such as carbon fibers and metallic fibers; metallic powders such as carbon fluoride powder, aluminum powder, and nickel powder; conductive whiskers such as zinc oxide and potassium titanate; conductive metal oxides such as titanium oxide; and polyphenylene derivatives.

The binder is a component assisting in binding between an active material and a conductive material and in binding of the active material to a current collector. The anode binder may be typically added in an amount of 1 to 50 wt% based on a total weight of a mixture including a cathode active material. Examples of the binder include, but are not limtied to, polyvinylidene fluoride, polyvinyl alcohols, carboxymethylcellulose (CMC), starch, hydroxypropylcellulose, regenerated cellulose, polyvinyl pyrrolidone, tetrafluoroethylene, polyethylene, polypropylene, ethylenepropylene-diene terpolymer (EPDM), sulfonated EPDM, styrene-butadiene rubber, fluorine rubber, and various copolymers.

The filler is optionally used as a component to inhibit cathode expansion. The filler is not particularly limited so long as it is a fibrous material that does not cause chemical changes in the fabricated secondary battery. Examples of the filler include olefin-based polymers such as polyethylene and polypropylene; and fibrous materials such as glass fiber and carbon fiber.

The anode plate is manufactured by coating an anode active material on an anode current collector and drying and pressing the coated anode current collector. As desired, the above-described components such as a conductive material, a binder, a filler, and the like may be further used in addition to the anode active material.

The anode current collector is generally fabricated to a thickness of 3 to 500 µm. The anode current collector is not particularly limited so long as it does not cause chemical changes in the fabricated battery and has conductivity. For example, the anode current collector may be made of copper, stainless steel, aluminum, nickel, titanium, sintered carbon, copper or stainless steel surface-treated with carbon, nickel, titanium, silver, or the like, or aluminum-cadmium alloys. Similar to the cathode current collector, the anode current collector may also have fine irregularities at a surface thereof to increase adhesion between the anode active material and the anode current collector. In addition, the anode current collector may be used in any of various forms including films, sheets, foils, nets, porous structures, foams, and non-woven fabrics.

Examples of the anode active material include, but are not limited to, carbon such as hard carbon and graphite-based carbon; metal composite oxides such as LiₓFe₂O₃ where 0≤x≤1, LiₓWO₂ where 0≤x≤1, SnₓMe₁₋ₓMe'_{y}O_{z} where Me: Mn, Fe, Pb, or Ge; Me': Al, B, P, Si, Groups I, II and III elements, or halogens; 0<x≤1; 1≤y≤3; and 1≤z≤8; lithium metals; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; Li-Co-Ni-based materials; titanium oxides; lithium titanium oxides.

In a specific embodiment, the anode active material may be lithium titanium oxide (LTO) represented by Formula 5 below, in particular Li_{0.8}Ti_{2.2}O₄, Li_{2.67}Ti_{1.33}O₄, LiTi₂O₄, Li_{1.33}Ti_{1.67}O₄, Li_{1.14}Ti_{1.71}O₄, or the like. However, composition and kind of the anode active material are not particularly limited so long as the anode active material is capable of intercalating/deintercalating lithium ions. More particularly, the anode active material may be a spinel-structure LTO that undergoes small change in crystal structure during charge and discharge and has excellent reversibility, such as Li_{1.33}Ti_{1.67}O₄ or LiTi₂O₄.

LiₐTi_{b}O₄ (5)

wherein 0.5≤a≤3 and 1≤b≤2.5.

The separator is disposed between the cathode and the anode and an insulating thin film having high ion permeability and mechanical strength is used as the separator. The separator typically has a pore diameter of 0.01 to 10 µm and a thickness of 5 to 300 µm. As the separator, sheets or non-woven fabrics made of an olefin polymer such as polypropylene, glass fibers or polyethylene, which have chemical resistance and hydrophobicity, are used. When a solid electrolyte such as a polymer is used as the electrolyte, the solid electrolyte may also serve as a separator.

The present invention also provides a secondary battery including the electrode assembly described above. In particular, the present invention provides a secondary battery having a structure in which the electrode assembly is impregnated with a lithium salt-containing electrolyte.

The lithium salt-containing electrolyte is composed of an electrolyte and a lithium salt. As the electrolyte, a non-aqueous organic solvent, an organic solid electrolyte, an inorganic solid electrolyte, or the like may be used, but embodiments of the present invention are not limited thereto.

For example, the non-aqueous organic solvent may be an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate, ethyl propionate, or the like.

Examples of the organic solid electrolyte include polyethylene derivatives, polyethylene oxide derivatives, polypropylene oxide derivatives, phosphoric acid ester polymers, poly agitation lysine, polyester sulfide, polyvinyl alcohols, polyvinylidene fluoride, and polymers containing ionic dissociation groups.

Examples of the inorganic solid electrolyte include nitrides, halides and sulfates of lithium (Li) such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, and Li₃PO₄-Li₂S-SiS₂.

The lithium salt is a material that is readily soluble in the non-aqueous electrolyte. Examples thereof include, but are not limited to, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, chloroborane lithium, lower aliphatic carboxylic acid lithium, lithium tetraphenyl borate, and imide.

In addition, in order to improve charge/discharge characteristics and flame retardancy, for example, pyridine, triethylphosphite, triethanolamine, cyclic ether, ethylenediamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride, or the like may be added to the non-aqueous electrolyte. In some cases, in order to impart incombustibility, the electrolyte may further include a halogen-containing solvent such as carbon tetrachloride and ethylene trifluoride. In addition, in order to improve high-temperature storage characteristics, the electrolyte may further include carbon dioxide gas, fluoro-ethylene carbonate (FEC), propene sultone (PRS), or the like.

In a specific embodiment, a lithium salt-containing non-aqueous electrolyte may be prepared by adding a lithium salt such as LiPF₆, LiClO₄, LiBF₄, LiN(SO₂CF₃)₂, or the like to a mixed solvent of a cyclic carbonate such as EC or PC, which is a high dielectric solvent, and a linear carbonate such as DEC, DMC, or EMC, which is a low-viscosity solvent.

### [BRIEF DESCRIPTION OF THE DRAWINGS]

The above and other objects, features and other advantages of the present invention will be more clearly understood from the following detailed description taken in conjunction with the accompanying drawings, in which:
FIG. 1 is a view of an electrode assembly according to an embodiment of the present invention;
FIG. 2 is a view of an electrode assembly according to another embodiment of the present invention;
FIG. 3 is a view of an electrode assembly according to another embodiment of the present invention;
FIG. 4 is a view of an electrode assembly according to another embodiment of the present invention;
FIG. 5 is a view of an electrode assembly according to another embodiment of the present invention;
FIG. 6 is a view of an electrode assembly
FIG. 7 is a view of an electrode assembly
FIG. 8 is a view of an electrode assembly.

### [MODE FOR INVENTION]

Now, the present invention will be described in more detail with reference to the accompanying drawings. These examples are provided for illustrative purposes only and should not be construed as limiting the scope and spirit of the present invention.

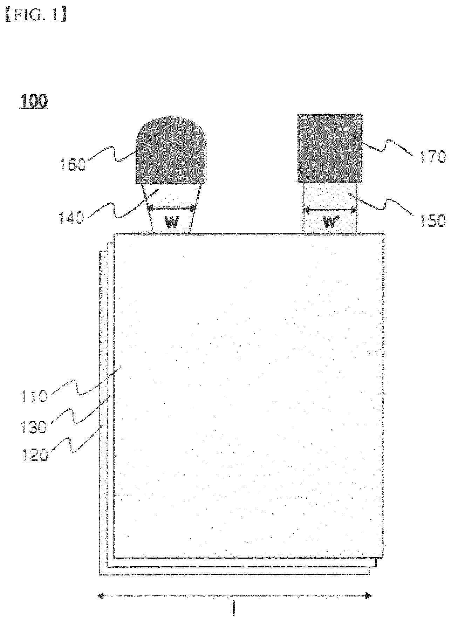

FIGS. 1 to 5 are views respectively illustrating electrode assemblies 100, 200, 300, 400 and 500 according to embodiments of the present invention.

The electrode assemblies 100, 200, 300, 400, 500, 600, 700 and 800 respectively include stacked structures including cathode plates 110, 210, 310, 410, 510, 610, 710 and 810 from which cathode tabs 140, 240, 340, 440, 540, 640, 740 and 840 protrude, anode plates 120, 220, 320, 420, 520, 620, 720 and 820 from which anode tabs 150, 250, 350, 450, 550, 650, 750 and 850 protrude, and separators 130, 230, 330, 430, 530, 630, 730 and 830 disposed between the cathode plates 110, 210, 310, 410, 510, 610, 710 and 810 and the anode plates 120, 220, 320, 420, 520, 620, 720 and 820, cathode leads 160, 260, 360, 460, 560, 660, 760 and 860 coupled to the cathode tabs 140, 240, 340, 440, 540, 640, 740 and 840, and anode leads 170, 270, 370, 470, 570, 670, 770 and 870 coupled to the anode tabs 150, 250, 350, 450, 550, 650, 750 and 850.

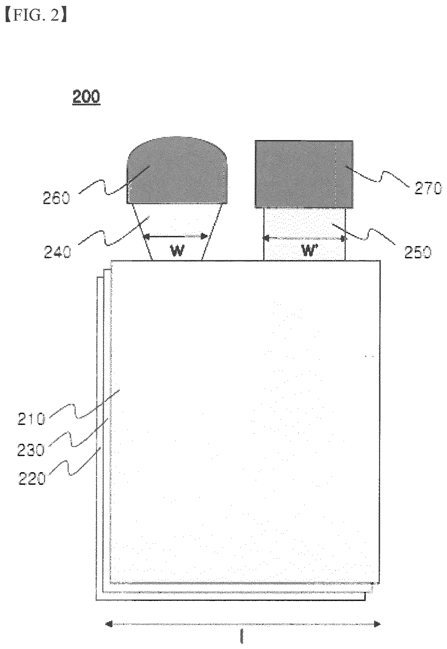

First, referring to FIGS. 1 and 2, when viewed in plan view, the cathode tabs 140 and 240 have a trapezoidal shape, the anode tabs 150 and 250 have a rectangular shape, the cathode leads 160 and 260 have a shape with an arc end portion, and the anode leads 170 and 270 have a rectangular shape. Thus, it is easy to distinguish the cathode tabs 140 and 240 from the anode tabs 150 and 250 and it is also easy to distinguish the cathode leads 160 and 260 from the anode leads 170 and 270.

Meanwhile, in the embodiment illustrated in FIG. 1, widths w and w' of the respective cathode tabs 140 and 240 and the respective anode tabs 150 and 250 are approximately 15% a length 1 of electrode surfaces with the tabs formed thereon. In the embodiment illustrated in FIG. 2, the widths w and w' thereof are approximately 35%. That is, the widths w and w' of the respective cathode tabs 140 and 240 and the respective anode tabs 150 and 250 are within a range of 5% to 45%.

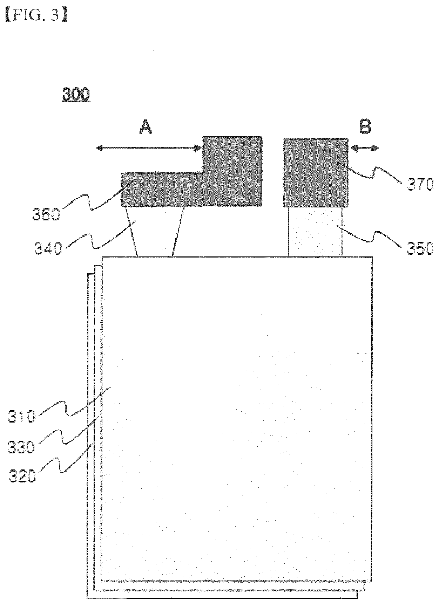

Referring to FIG. 3, when viewed in plan view, the cathode tab 340 has a trapezoidal shape, the anode tab 350 has a rectangular shape, the cathode lead 360 has a bent structure, and the anode lead 370 has a rectangular shape. Thus, it is easy to distinguish the cathode tab 340 from the anode tab 350 and, due to the bent shape of the cathode lead 360, the cathode lead 360 and the anode lead 370 are asymmetrically (A≠B) positioned such that the cathode and anode leads 360 and 370 have different distances from an axis passing through the center of the electrode in the up and down direction and thus it is also easy to distinguish the cathode lead 360 from the anode lead 370.

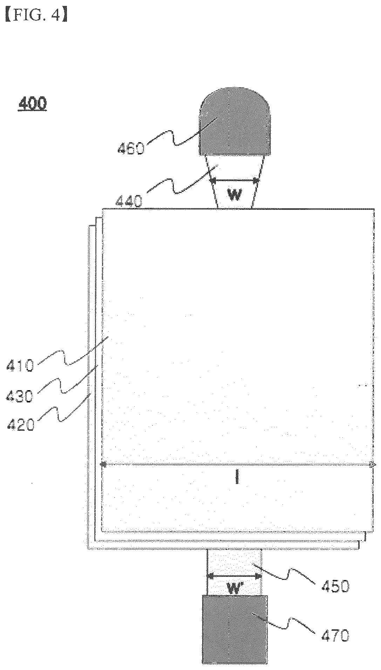

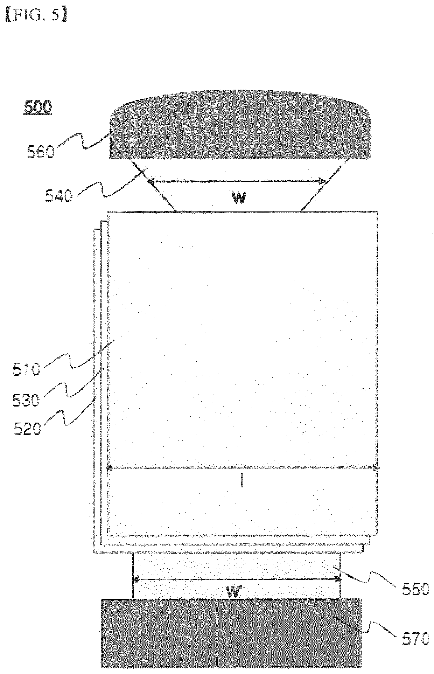

Referring to FIGS. 4 and 5, when manufacturing the electrode assemblies 400 and 500, the cathode tabs 440 and 540 and the anode tabs 450 and 550 are respectively disposed on opposite end portions of the electrode assembly 400 and on opposite end portions of the electrode assembly 500. In this case, as in the embodiment of FIG. 1, the cathode tabs 440 and 540 and the anode tabs 450 and 550 have different shapes and the cathode leads 460 and 560 and the anode leads 470 and 570 also have different shapes. Thus, it is easy to distinguish the cathode tabs 440 and 540 from the anode tabs 450 and 550 and to distinguish the cathode leads 460 and 560 from the anode leads 470 and 570.

Meanwhile, in the embodiment illustrated in FIG. 4, the widths w and w' of the respective cathode tabs 440 and 540 and the respective anode tabs 450 and 550 are approximately 15% a length 1 of electrode surfaces with the tabs formed thereon. In the embodiment illustrated in FIG. 5, the widths w and w' thereof are approximately 70% to 80%. That is, the widths w and w' of the respective cathode tabs 440 and 540 and the respective anode tabs 450 and 550 are within a range of 10% to 80% the length of the electrode surfaces.

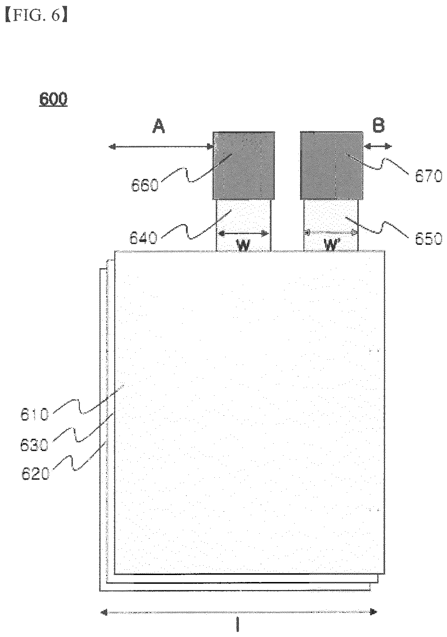

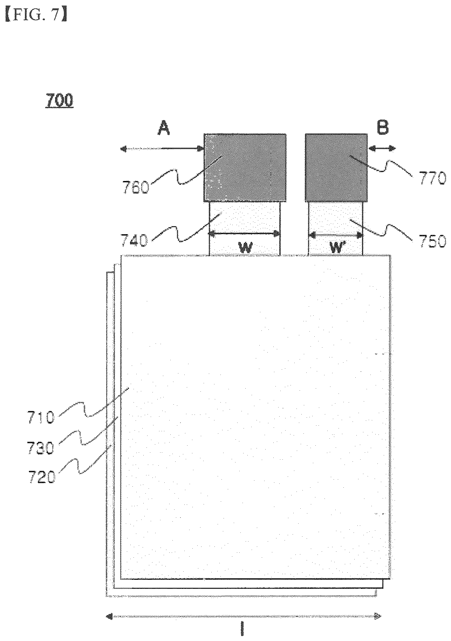

Referring to FIGS. 6 and 7, the electrode assemblies 600 and 700 and the electrode assemblies 100 and 200 of FIGS. 1 and 2 have different structures in that the cathode tabs 640 and 740 and the anode tabs 650 and 750 have the same shape, but are asymmetrically (A≠B) positioned. Thus, it is easy to distinguish the cathode tabs 640 and 740 from the anode tabs 650 and 750. In addition, in this case, although the cathode leads 660 and 760 and the anode leads 670 and 770 have the same shape, according to the positions of the electrode tabs 640 and 650 and 740 and 750, the two electrode leads 660 and 670 and 760 and 770 are also asymmetrically (A≠B) positioned such that the two electrode leads have different distances from an axis passing through the center of the electrode in the up and down direction. Thus, it is also easy to distinguish the cathode leads 660 and 760 from the anode leads 670 and 770.

Meanwhile, in the embodiment illustrated in FIG. 6, the widths w and w' of the respective cathode tabs 640 and 740 and the respective anode tabs 650 and 750 are approximately 15% a length 1 of electrode surfaces with the tabs formed thereon. In the embodiment illustrated in FIG. 7, the width w of the cathode tab 740 is about 25% the length 1 of electrode surfaces and the width w' of the anode tab 750 is about 15% the length 1 of electrode surfaces. That is, the widths w and w' of the respective cathode and anode tabs may be identical or different within a range of 5% to 45%.

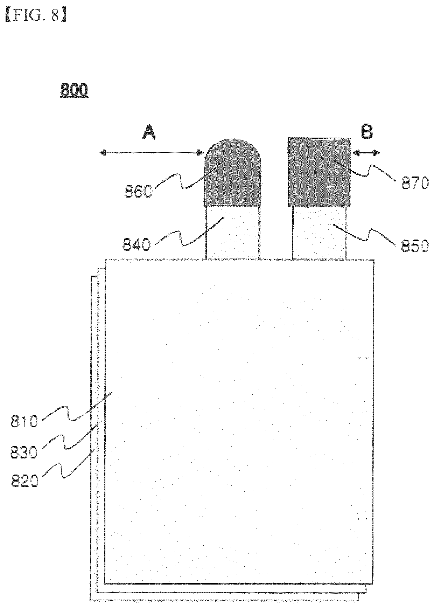

Referring to FIG. 8, the electrode assembly 800 and the electrode assemblies 600 and 700 of FIGS. 6 and 7 have different structures in that, when viewed in plan view, the cathode lead 860 has a shape with an arc end portion and the anode lead 870 has a rectangular shape. That is, even when the cathode tab 840 and the anode tab 850 are asymmetrically positioned, it may be easy to distinguish the cathode lead 860 from the anode lead 870 by making the electrode leads 860 and 870 have different shapes.

Although the preferred embodiments of the present invention have been disclosed for illustrative purposes, those skilled in the art will appreciate that various modifications, additions and substitutions are possible, without departing from the scope of the invention as disclosed in the accompanying claims.

### [INDUSTRIAL APPLICABILITY]

As described above, in an electrode assembly according to the present invention, cathode tabs and anode tabs have different shapes or are asymmetrically positioned with respect to electrode surfaces with the tabs formed thereon and thus cross-welding may be prevented. In addition, cathode and anode leads have different shapes or are asymmetrically positioned with respect to the electrode surfaces, whereby confusion of the positions of a cathode and an anode during module assembly or wiring for electrical connection may be addressed.

In addition, widths of the cathode and anode tabs are formed to predetermined sizes based on the length of the electrode surfaces and, accordingly, resistance decreases, which reduces heat generation of a battery.

## Claims

1. An electrode assembly comprising:
a plurality of alternately arranged cathode and anode plates;
a separator disposed between the cathode plate and the anode plate;
a plurality of cathode tabs respectively formed on the cathode plates in a structure in which the tabs protrude from the electrode surfaces;
a plurality of anode tabs respectively formed on the anode plate in a structure in which the tabs protrude from the electrode surfaces;
a cathode lead coupled to the cathode tabs; and
an anode lead coupled to the anode tabs,
wherein the cathode tabs and the anode tabs have different shapes and
wherein widths of the cathode tabs and the anode tabs are equal to 2 to 100% a length of electrode surfaces with the tabs formed thereon,
wherein the widths are a size in a direction perpendicular to a direction in which tabs protrude from electrode surfaces,
wherein the cathode lead and the anode lead are respectively welded to the cathode tabs and the anode tabs, and
wherein heights of welding portions where the cathode tabs and the anode tabs are respectively coupled to the cathode lead and the anode lead are equal to 3 to 30%, preferably 3 to 20%, a height of the cathode and anode leads,
wherein at least one of the cathode and anode tabs has a tapered shape selected from a trapezoidal shape, an upwardly-tapered funnel shape, a sector shape or a mushroom shape, a welding portion of which has the wider width.

2. The electrode assembly according to claim 1, wherein the cathode tabs and the anode tabs have different polygonal shapes.

3. The electrode assembly according to claim 1, wherein any one kind of the cathode and anode tabs has a shape with an arc end portion.

4. The electrode assembly according to claim 1, wherein the widths of the cathode tabs and the anode tabs are equal to 2 to 80% the length of electrode surfaces with the tabs formed thereon.

5. The electrode assembly according to claim 1, wherein the cathode tabs and the anode tabs are positioned on an end portion in a lateral direction of the electrode assembly, or respectively positioned on opposite end portions of the electrode assembly facing each other, or respectively positioned on end portions of the electrode assembly perpendicular to each other, when viewed in plan view in manufacture of the electrode assembly.

6. The electrode assembly according to claim 5, wherein the cathode tabs and the anode tabs are positioned on an end portion in a lateral direction of the electrode assembly when viewed in plan view in manufacture of the electrode assembly, and the widths of the cathode tabs and the anode tabs are equal to 5 to 45%, preferably 10 to 40%, the length of electrode surfaces with the tabs formed thereon.

7. The electrode assembly according to claim 5, wherein the cathode tabs and the anode tabs are respectively positioned on opposite end portions of the electrode assembly facing each other, or respectively positioned on end portions of the electrode assembly perpendicular to each other, when viewed in plan view in manufacture of the electrode assembly, and the widths of the cathode tabs and the anode tabs are equal to 10 to 80%%, preferably 15 to 70%, the length of electrode surfaces with the tabs formed thereon.

8. The electrode assembly according to claim 1, wherein one of the cathode and anode leads has a bend shape so that the cathode and anode leads are asymmetrically positioned with respect to the electrode surfaces.

9. The electrode assembly according to claim 1, wherein the cathode lead and the anode lead have different shapes, preferably, the cathode lead and the anode lead have different polygonal shapes or any one of the cathode lead and the anode lead has a shape with an arc end portion.

10. The electrode assembly according to claim 9, wherein the cathode lead or the anode lead has a bent shape so that the cathode lead and the anode lead are asymmetrically positioned with respect to the electrode surfaces.

11. The electrode assembly according to claim 1, wherein materials constituting the cathode tabs and the anode tabs are identical, or materials constituting the cathode and anode leads are identical.

12. The electrode assembly according to claim 1, wherein the cathode plate comprises, as a cathode active material, a spinel-structure lithium manganese composite oxide represented by Formula 1 below:
LiₓM_{y}Mn_{2-y}O_{4-z}A_{z} (1)
wherein 0.9≤x≤1.2, 0<y<2, and 0≤z<0.2;
M is at least one element selected from the group consisting of Al, Mg, Ni, Co, Fe, Cr, V, Ti, Cu, B, Ca, Zn, Zr, Nb, Mo, Sr, Sb, W, Ti, and Bi; and
A is at least one monovalent or divalent anion.

13. The electrode assembly according to claim 12, wherein the lithium manganese composite oxide of Formula 1 is a lithium nickel manganese composite oxide (LNMO) represented by Formula 2 below:
LiₓNi_{y}M-n_{2-y}O₄ (2)
wherein 0.9≤x≤1.2 and 0.4≤y≤0.5,
preferably the lithium nickel manganese composite oxide is LiNi_{0.5}Mn_{1.5}O₄ or LiNi_{0.4}Mn_{1.6}O₄.

14. The electrode assembly according to claim 1, wherein the cathode plate comprises, as a cathode active material, at least one of oxides represented by Formulas 3 and 4:
Li_{1+x'}Ni_{1-y'-z'-t}Mn_{y'}Co_{z'}M'ₜO_{2-w}A'_{w} (3)
wherein -0.2<x'<0.2, 0≤y'≤0.4, 0≤z'≤0.4, 0≤t≤0.2, and 0≤w≤0.05; M'= a first row transition metal such as Fe, Cr, Ti, Zn, V, or the like, Al, Mg, or the like; A'= Groups 6A and 7A elements such as S, Se, F, Cl, I, and the like, and
Li_{1+x"}Mn_{2-y"}M"_{y"}O_{4-w'}A"_{w'} (4)
wherein -0.2<x"<0.2, 0≤y"<0.4, and 0≤w'≤0.05; M"=a first row transition metal such as Ni, Mn, Fe, Cr, Ti, Zn, V, or the like; and A"= Groups 6A and 7A elements such as S, Se, F, Cl, I, and the like,
preferably the cathode active material is at least one oxide selected from the group consisting of LiNi_{1/3}Mn_{1/3}Co_{1/3}O₂, LiNi_{0.6}Co_{0.2}Mn_{0.2}O₂, LiNi_{0.8}Co_{0.1}Mn_{0.1}O₂, and LiMn₂O₄.

15. The electrode assembly according to claim 1, wherein the anode plate comprises, as an anode active material, lithium titanium oxide (LTO) represented by Formula 5 below:
LiₐTi_{b}O₄ (5)
wherein 0.5≤a≤3 and 1≤b≤2.5,
preferably the lithium titanium oxide is Li_{1.33}Ti_{1.67}O₄ or LiTi₂O₄.

16. A secondary battery comprising the electrode assembly according to any one of claims 1 to 15.

## Patentansprüche

1. Elektrodenanordnung, umfassend:
eine Vielzahl alternierend angeordneter Kathoden- und Anodenplatten;
einen Separator, der zwischen der Kathodenplatte und der Anodenplatte angeordnet ist;
eine Vielzahl von Kathodenreitern, die jeweils auf den Kathodenplatten gebildet sind, in einer Struktur, in der die Reiter von den Elektrodenoberflächen hervorstehen;
eine Vielzahl von Anodenreitern, die jeweils auf den Anodenplatten gebildet sind, mit einer Struktur, in der die Reiter von den Elektrodenoberflächen hervorstehen;
eine Kathodenleitung, die mit den Kathodenreitern verbunden ist; und
eine Anodenleitung, die mit den Anodenreitern verbunden ist,
wobei die Kathodenreiter und die Anodenreiter verschiedene Formen haben und
wobei Breiten der Kathodenreiter und der Anodenreiter gleich 2 bis 100% einer Länge der Elektrodenoberflächen mit den Reitern darauf gebildet sind,
wobei die Breiten eine Größe in einer Richtung, senkrecht zu einer Richtung, in der die Reiter von den Elektrodenoberflächen hervorstehen, sind,
wobei die Kathodenleitung und die Anodenleitung jeweils mit den Kathodenreitern und den Anodenreitern verschweißt sind, und
wobei Höhen der Schweißbereiche, an denen die Kathodenreiter und die Anodenreiter jeweils mit dem Kathodenleiter und dem Anodenleiter verschweißt sind, gleich 3 bis 30%, vorzugsweise 3 bis 20%, einer Höhe der Kathoden und der Anodenleiter sind,
wobei zumindest eines der Kathoden- und Anodenreiter eine keilierte Form hat, ausgewählt aus einer trapezoidalen Form, einer aufwärts kegelförmigen Trichterform, einer kreisausschnittförmigen Form oder einer Pilzform, und einem Verschweißteil mit einer breiteren Breite.

2. Elektrodenanordnung nach Anspruch 1, wobei die Kathodenreiter und die Anodenreiter verschiedene polygonale Formen haben.

3. Elektrodenanordnung nach Anspruch 1, wobei jede Art der Kathoden- und Anodenreiter eine Form mit einem Endbogenteil hat.

4. Elektrodenanordnung nach Anspruch 1, wobei die Breiten der Kathodenreiter und der Anodenreiter gleich 2 bis 80% der Länge der Elektrodenoberflächen, die mit den Reitern darauf gebildet sind, haben.

5. Elektrodenanordnung nach Anspruch 1, wobei die Kathodenreiter und die Anodenreiter auf einem Endteil einer derselben in einer seitlichen Richtung der Elektrodenanordnung angeordnet sind oder jeweils auf entgegengesetzten Endbereichen der Elektrodenanordnung einander entgegengesetzt angeordnet sind oder jeweils an den Endteilen der Elektrodenanordnung senkrecht zueinander in planarer Ansicht der Herstellung der Elektrodenanordnung angeordnet sind.

6. Elektrodenanordnung nach Anspruch 5, wobei die Kathodenreiter und die Anodenreiter auf einem Endteil in einer seitlichen Richtung der Elektrodenanordnung, in planarer Betrachtung der Herstellung der Elektrodenanordnung, angeordnet sind und die Breiten der Kathodenreiter und der Anodenreiter gleich 5 bis 45%, vorzugsweise 10 bis 40%, der Länge der Elektrodenoberflächen, die mit den Reitern darauf gebildet sind, sind.

7. Elektrodenanordnung nach Anspruch 5, wobei die Kathodenreiter und die Anodenreiter jeweils an entgegengesetzten Endteilen der Elektrodenanordnung einander gegenüber angeordnet sind, oder jeweils an Endbereichen der Elektrodenanordnung senkrecht zueinander, in planarer Ansicht bei der Herstellung der Elektrodenanordnung, angeordnet sind und die Breite der Elektrodenreiter und der Anodenreiter gleich 10 bis 80%, vorzugsweise 15 bis 70% der Länge der Elektrodenoberflächen, auf denen die Reiter gebildet sind, sind.

8. Elektrodenanordnung nach Anspruch 1, wobei einer der Kathoden- und Anodenleiter eine gebogene Form hat, so dass die Kathoden- und Anodenleiter asymmetrisch hinsichtlich der Elektrodenoberflächen angeordnet sind.

9. Elektrodenanordnung nach Anspruch 1, wobei der Kathodenleiter und der Anodenleiter verschiedene Formen haben, vorzugsweise der Kathodenleiter und der Anodenleiter unterschiedliche polygonale Formen haben und eine beliebige des Anodenleiters und des Kathodenleiters eine Form mit einem Endbogenteil hat.

10. Elektrodenanordnung nach Anspruch 9, wobei der Kathodenleiter oder der Anodenleiter eine gebogene Form hat, so dass der Kathodenleiter und der Anodenleiter hinsichtlich der Elektrodenoberflächen asymmetrisch positioniert sind.

11. Elektrodenanordnung nach Anspruch 1, wobei Materialien, aus denen die Kathodenreiter und die Anodenreiter gebildet sind, identisch sind oder die Materialien, aus denen die Kathodenleiter und Anodenleiter gebildet sind, identisch sind.

12. Elektrodenanordnung nach Anspruch 1, wobei die Kathodenplatte, als ein kathodenaktives Material, eine Spinellstruktur Lithiummanganverbundoxid, dargestellt durch die unten angegebene Formel 1, umfasst:
LiₓM_{y}Mn_{2-y}O_{4-z}A_{z} (1),
wobei 0,9≤x≤1,2, O<y<2 und 0≤z<0,2 sind;
M zumindest ein Element ist, ausgewählt aus der Gruppe, bestehend aus Al, Mg, Ni, Co, Fe, Cr, V, Ti, Cu, B, Ca, Zn, Zr, Nb, Mo, Sr, Sb, W, Ti und Bi; und
A zumindest ein monovalentes oder divalentes Anion ist.

13. Elektrodenanordnung nach Anspruch 12, wobei das Lithiummanganverbundoxid der Formel 1 ein Lithiumnickelmanganverbundoxid (LNMO), dargestellt durch die unten angegebene Formel 2, ist:
LiₓNi_{y}Mn_{2-y}O₄ (2),
wobei 0,9≤x≤1,2 und 0,4≤y≤0,5 sind,
vorzugsweise das Lithiumnickelmanganverbundoxid LiNi_{0,5}Mn_{1,5}O₄ oder LiNi_{0,4}Mn_{1,6}O₄ ist.

14. Elektrodenanordnung nach Anspruch 1, wobei die Kathodenplatte, als ein kathodenaktives Material, zumindest eines der Oxide, dargestellt durch die Formeln 3 und 4, umfasst:
Li_{1+x'}Ni_{1-y'-z'-t}Mn_{y'}Co_{z'}M'ₜO_{2-w}A'_{w} (3),
wobei -0,2<x'<0,2, 0≤y'≤0,4, 0≤z'≤0,4, 0≤t≤0,2 und 0≤w≤0,0₅ sind; M'= ein Übergangsmetall der ersten Reihe, wie etwa Fe, Cr, Ti, Zn, V oder dergleichen, ist; A' = Elemente der Gruppen 6A und 7A, wie etwa S, Se, F, Cl, I und dergleichen, ist; und
Li_{1+x"}Mn_{2-y"}M"_{y"}O_{4-w'}A"_{w'} (4),
wobei -0,2<x"<0,2, 0≤y"<0,4 und 0≤w'≤0,05 sind; M" = ein Übergangsmetall der ersten Reihe, wie etwa Ni, Mn, Fe, Cr, Ti, Zn, V oder dergleichen ist; und A" = Elemente der Gruppen 6A und 7A, wie etwa S, Se, F, Cl, I und dergleichen ist, vorzugsweise das kathodenaktive Material zumindest ein Oxid ist, ausgewählt aus der Gruppe, bestehend aus LiNi_{1/3}Mn_{1/3}Co_{1/3}O₂, LiNi_{0,6}Co_{0,2}Mn_{0,2}O₂, LiNi_{0,8}Co_{0,1}Mn_{0,1}O₂ und LiMn₂O₄.

15. Elektrodenanordnung nach Anspruch 1, wobei die Anodenplatte, als ein anodenaktives Material, ein Lithiumtitanoxid (LTO), dargestellt durch die unten angegebene Formel 5, umfasst:
LiₐTi_{b}O₄ (5),
wobei 0,5≤a≤3 und 1≤b≤2,5 sind,
vorzugsweise das Lithiumtitanoxid Li_{1.33}Ti_{1.67}O₄ oder LiTi₂O₄ ist.

16. Sekundärbatterie, umfassend die Elektrodenanordnung nach einem der Ansprüche 1 bis 15.

## Revendications

1. Un ensemble d'électrodes comprenant :
une pluralité de plaques de cathode et d'anode agencées en alternance ;
un séparateur disposé entre la plaque de cathode et la plaque d'anode ;
une pluralité de languettes de cathode formées respectivement sur les plaques de cathode dans une structure dans laquelle les languettes dépassent des surfaces d'électrode ;
une pluralité de languettes d'anode formées respectivement sur la plaque d'anode en une structure dans laquelle les languettes dépassent des surfaces d'électrode ;
un fil de cathode couplé aux languettes de cathode ; et
un fil d'anode couplé aux languettes d'anode,
dans lequel les languettes de cathode et les languettes d'anode ont des formes différentes et
dans lequel les largeurs des languettes de cathode et des languettes d'anode sont comprises entre 2 et 100% d'une longueur des surfaces d'électrode avec les languettes formées sur celles-ci,
dans lequel les largeurs sont une dimension dans une direction perpendiculaire à une direction dans laquelle des languettes dépassent des surfaces d'électrode,
dans lequel le fil de cathode et le fil d'anode sont soudés respectivement aux languettes de cathode et aux languettes d'anode, et
dans lequel les hauteurs des parties de soudage où les languettes de cathode et les languettes d'anode sont couplées respectivement au fil de cathode et au fil d'anode sont comprises entre 3 et 30%, de préférence entre 3 et 20%, d'une hauteur des fils de cathode et d'anode,
dans lequel une ou plusieurs des languettes de cathode et d'anode ont une forme effilée sélectionnée parmi une forme trapézoïdale, une forme d'entonnoir effilé vers le haut, une forme de secteur ou une forme de champignon, dont une partie de soudage a la largeur plus large.

2. L'ensemble d'électrodes selon la revendication 1, dans lequel les languettes de cathode et les languettes d'anode ont des formes polygonales différentes.

3. L'ensemble d'électrodes selon la revendication 1, dans lequel l'une quelconque des languettes de cathode et d'anode a une forme avec une partie d'extrémité en arc.

4. L'ensemble d'électrodes selon la revendication 1, dans lequel les largeurs des languettes de cathode et des languettes d'anode sont comprises entre 2 et 80% de la longueur des surfaces d'électrode avec les languettes formées sur celles-ci.

5. L'ensemble d'électrodes selon la revendication 1, dans lequel les languettes de cathode et les languettes d'anode sont positionnées sur une partie d'extrémité dans une direction latérale de l'ensemble d'électrodes ou positionnées respectivement sur des parties d'extrémité opposées de l'ensemble d'électrodes se faisant face, ou positionnées respectivement sur des parties d'extrémité de l'ensemble d'électrodes perpendiculaires les unes aux autres, lorsqu'on regarde dans une vue en plan de la fabrication de l'ensemble d'électrodes.

6. L'ensemble d'électrodes selon la revendication 5, dans lequel les languettes de cathode et les languettes d'anode sont positionnées sur une partie d'extrémité dans une direction latérale de l'ensemble d'électrodes lorsqu'on regarde dans une vue en plan de la fabrication de l'ensemble d'électrodes, et les largeurs des languettes de cathode et les languettes d'anode sont comprises entre 5 et 45%, de préférence entre 10 et 40%, de la longueur des surfaces d'électrode avec les languettes formées sur celles-ci.

7. L'ensemble d'électrodes selon la revendication 5, dans lequel les languettes de cathode et les languettes d'anode sont positionnées respectivement sur des parties d'extrémité opposées de l'ensemble d'électrodes se faisant face ou positionnées respectivement sur des parties d'extrémité de l'ensemble d'électrodes perpendiculaires les unes aux autres, lorsqu'on regarde dans une vue en plan de la fabrication de l'ensemble d'électrodes, et les largeurs des languettes de cathode et des languettes d'anode sont comprises entre 10 et 80%, de préférence entre 15 et 70%, de la longueur des surfaces d'électrode avec les languettes formées sur celles-ci.

8. L'ensemble d'électrodes selon la revendication 1, dans lequel, soit le fil de cathode, soit le fil d'anode, a une forme coudée de telle sorte que les fils de cathode et d'anode sont positionnés asymétriquement par rapport aux surfaces d'électrode.

9. L'ensemble d'électrodes selon la revendication 1, dans lequel le fil de cathode et le fil d'anode ont des formes différentes, de préférence, le fil de cathode et le fil d'anode ont différentes formes polygonales ou, soit le fil de cathode, soit le fil d'anode, a une forme avec une partie d'extrémité en arc.

10. L'ensemble d'électrodes selon la revendication 9, dans lequel le fil de cathode ou le fil d'anode a une forme coudée de telle sorte que le fil de cathode et le fil d'anode sont positionnés asymétriquement par rapport aux surfaces d'électrode.

11. L'ensemble d'électrodes selon la revendication 1, dans lequel des matériaux constituant les languettes de cathode et les languettes d'anode sont identiques, ou des matériaux constituant les fils de cathode et d'anode sont identiques.

12. L'ensemble d'électrodes selon la revendication 1, dans lequel la plaque de cathode comprend, en tant que matériau actif de cathode, un oxyde de composite de lithium manganèse à structure de spinelle représenté par la formule 1 ci-dessous :
LiₓM_{y}Mn_{2-y}O_{4-z}A_{z} (1)
dans lequel 0,9≤x≤1,2, 0<y<2 et 0≤z<0,2;
M est un ou plusieurs éléments sélectionnés dans le groupe constitué par Al, Mg, Ni, Co, Fe, Cr, V, Ti, Cu, B, Ca, Zn, Zr, Nb, Mo, Sr, Sb, W, Ti et Bi ; et
A est un anion soit monovalent soit divalent.

13. L'ensemble d'électrodes selon la revendication 12, dans lequel l'oxyde de composite de lithium manganèse de la formule 1 est un oxyde de composite de lithium nickel manganèse (LNMO) représenté par la formule 2 ci-dessous :
LiₓNi_{y}Mn_{2-y}O₄ (2)
dans lequel 0,9≤x≤1,2, et 0,4≤y≤0,5,
de préférence l'oxyde de composite de lithium nickel manganèse est LiNi_{0,5}Mn_{1,5}O₄ ou LiNi_{0,4}Mn_{1,6}O₄.

14. L'ensemble d'électrodes selon la revendication 1, dans lequel la plaque de cathode comprend, en tant que matériau actif de cathode, un ou plusieurs des oxydes représentés par les formules 3 et 4 :
Li_{1+x'}Ni_{1-y'-z-t}Mn_{y'}Co_{z'}M'_{t'}O_{2-w}A'_{w} (3)
dans lequel -0,2<x'<0,2, 0≤y'≤0,4, 0≤z'≤0,4, 0≤t≤0,2 et 0≤w≤0,05 ; M'= un métal de transition de la première rangée tel que Fe, Cr, Ti, Zn, V ou similaire, Al, Mg, ou similaire ; A'= éléments des groupes 6A et 7A tel que S, Se, F, Cl, I et similaire, et
Li_{1+x"}Mn_{2-y"}M"_{y"}O_{4-w}A"_{w'} (4)
dans lequel -0,2<x"<0,2, 0≤y"<0,4 et 0≤w'≤0,05 ; M" = un métal de transition de la première rangée tel que Ni, Mn, Fe, Cr, Ti, Zn, V ou similaire ; et A" = éléments des groupes 6A et 7A tel que S, Se, F, Cl, I et similaire,
de préférence le matériau actif de cathode est un ou plusieurs oxydes sélectionnés dans le groupe constitué par LiNi_{1/3}Mn_{1/3}Co_{1/3}O₂, LiNi_{0,6}Co_{0,2}Mn_{0,2}O₂, LiNi_{0,8}Co_{0,1}Mn_{0,1}O₂ et LiMn₂O₄.

15. L'ensemble d'électrodes selon la revendication 1, dans lequel la plaque d'anode comprend, en tant que matériau actif d'anode, l'oxyde de lithium titane (LTO) représenté par la formule 5 ci-dessous :
LiₐTi_{b}O₄ (5)
dans lequel 0,5<a<3 et 1≤b≤2,5,
de préférence l'oxyde de lithium titane est Li_{1,33}Ti_{1,67}O4 ou LiTi₂O₄.

16. Une batterie rechargeable comprenant l'ensemble d'électrodes selon l'une quelconque des revendications 1 à 15.
